# EUROPÄISCHE PATENTSCHRIFT

(11) **EP 4 368 424 B1**
(45) Veröffentlichungstag und Bekanntmachung des Hinweises auf die Patenterteilung: **10.12.2025**
(21) Anmeldenummer: 23205709.1
(22) Anmeldetag: 25.10.2023
(51) Int. Cl.: B60G 17/019, B60G 17/052

(54) **VORRICHTUNG ZUR HÖHENERMITTLUNG EINER LUFTFEDER**
DEVICE FOR DETERMINING THE HEIGHT OF AN AIR SPRING
DISPOSITIF DE DÉTERMINATION DE LA HAUTEUR D'UN RESSORT PNEUMATIQUE

(30) Priorität: 08.11.2022 DE 102022211814
(43) Veröffentlichungstag der Anmeldung: 15.05.2024
(73) Patentinhaber: ContiTech Deutschland GmbH, 30175 Hannover (DE)
(72) Erfinder: Leinemann, Marc, 30165 Hannover (DE); Gerami-Manesch, Bijan, 30165 Hannover (DE); Reck, Siegfried, 30165 Hannover (DE)
(74) Vertreter: Preusser, Andrea

(56) Entgegenhaltungen:
- WO-A1-2020/229139
- DE-A1- 102004 051 740
- JP-A- H0 370 615

## Beschreibung

Die Erfindung betrifft eine Vorrichtung zur Ermittlung einer Höhe von einer Luftfeder gemäß dem Anspruch 1.

Die Erfindung betrifft ebenfalls eine Maschine und ein Kraftfahrzeug.

Außerdem betrifft die Erfindung ein Verfahren zur Ermittlung einer Höhe von einer Luftfeder gemäß dem Anspruch 7.

Eine Luftfeder weist üblicherweise außer einem Balg (Rollbalg oder Faltenbalg) zwei abstandsvariabel zueinander angeordnete Endglieder auf, wobei eines der beiden Endglieder an einem Chassis und das andere Endglied an einem Fahrwerk eines Fahrzeugs befestigt werden kann. Im Fall einer Rollbalg-Luftfeder ist das eine der beiden Endglieder ein Abrollkolben, während das andere Endglied ein (Luftfeder-)Deckel ist. Durch Zuführen oder Ableiten eines Fluids, vorzugsweise Luft, in bzw. aus dem durch den Balg und den Endgliedern gebildeten Innenvolumen der Luftfeder, kann die Höhe der Luftfeder verändert werden.

Elektronische Niveauregelsysteme für Kraftfahrzeuge benötigen Sensorik, die den Istwert der Fahrzeughöhe ermittelt und an eine elektronische Rechenvorrichtung bzw. eine Regelelektronik (ECU) des Systems meldet. Aus dem Stand der Technik sind verschiedene Lösungen zur Ermittlung der Höhe einer Luftfeder bekannt.

Die Messung der Höhe der Luftfeder entspricht dem Prinzip einer Längenmessung. Diese kann beispielsweise mit einem Spule-Tauchanker-System durchgeführt werden. Mit dem Einfederungsgrad der Luftfeder ändert sich die Eintauchtiefe eines Ankers in eine Spule, was zu einer Induktivitätsänderung führt. Diese wiederum kann gemessen und von der Regelelektronik einer Fahrzeughöhe zugeordnet werden. Nachteilig ist der beschränkte Längenmessbereich und die erforderlichen Kugelgelenke zur Montage von Tauchanker und Spule. Ein weiterer Nachteil ist der in den Lagern auftretende Verschleiß.

Als weitere Möglichkeit kann mit Hilfe von Ultraschall-Laufzeitmessungen der zwischen den beiden Endgliedern momentan jeweils vorhandene lichte Abstand und hierüber die Feder- und bzw. oder die Fahrzeughöhe bestimmt werden. Hierzu wird bevorzugt nach der Impuls-Echo-Methode verfahren, wobei an einem der Endglieder ein Sender/Empfänger und an dem anderen Endglied ein Reflektor anzubringen ist.

Bei dem in der DE 198 11 982 A1 beschriebenen Ultraschall-Laufzeitmessverfahren wird zur Bestimmung der Federhöhe ein einzelner piezokeramischer Schallwandler verwendet. Dabei ist die Form der Schallkeule im Wesentlichen durch den Durchmesser des Schallwandlers und dessen Arbeitsfrequenz vorgegeben. Damit das Laufzeitverfahren funktioniert und unter allen Betriebsbedingungen der Luftfeder ein verwertbares Echo erhalten werden kann, muss der Schallwandler innerhalb der Luftfeder genau ausgerichtet werden. Besonders bei außermittiger Anordnung muss der Wandler geneigt und um die Hochachse der Feder gedreht werden. Das beschriebene Verfahren ist aufwendig in der Konstruktion und der Installation bzw. Ausrichtung des Sensors. Bei fehlerhafter Installation des Sensors kann die Messung ungenau werden bzw. zu falschen Messergebnissen führen. Zudem steigen die Kosten des Luftfedersystems durch die zusätzlich erforderlichen Sensorkomponenten.

Die DE 10 2004 051740 A1 betrifft ein Verfahren zur Veränderung eines Niveaus eines Nutzfahrzeuges mit einer Luftfederungsanlage von einem Ist-Niveau auf ein Soll-Niveau, bei dem ein Druckniveau eines Federbalges dadurch verändert wird, dass der Federbalg über ein Schaltventil in Öffnungsstellung mit einem zweiten Druckniveau verbunden wird, welches von dem Druckniveau des Federbalges abweicht. In einer Steuereinheit wird ein zukünftiger Zeitpunkt ermittelt, zu dem voraussichtlich das Schaltventil zur Herbeiführung der gewünschten Niveauänderung in eine Sperrstellung überführt werden muss. Nachteiliger Weise benötigt die Steuereinheit als Einflussgröße auf die erforderliche Zeitdauer der Öffnungsstellung viele Eingangsgrößen, nämlich einen Soll-Wert der Änderung des Niveaus, einen Beladungszustand und eine Druckdifferenz zwischen dem Federbalg und dem Vorratsbehälter.

Die WO 2020/229 139 A1 betrifft ein weiteres Verfahren zur Steuerung einer Luftfederungsanlage eines Fahrzeugs, wobei mittels Druckmesswerten der Balgdruck in den Federbälgen auf einen Zieldruck einstellbar ist.

Die JP H03 70615 A betrifft die Steuerung einer Luftfedervorrichtung unter Berücksichtigung eines Luftdrucks in einem Lufttank, eines Luftdrucks in der Luftfedervorrichtung und eines Bodenfreiheitswerts.

Der Erfindung liegt daher die Aufgabe zugrunde, eine Vorrichtung und ein Verfahren zur Ermittlung der Höhe einer Luftfeder bereitzustellen, wobei gegenüber den bekannten Lösungen zur Höhenmessung eine geringere Anzahl von Sensoren erforderlich ist. Zusätzlich oder alternativ sollen die Systemkosten und bzw. oder die Komplexität der Vorrichtung verringert werden. Zusätzlich oder alternativ soll die Genauigkeit der Höhenermittlung und bzw. oder die Reproduzierbarkeit der Höhenermittlung verbessert werden.

Die Lösung dieser Aufgabe ergibt sich durch eine Vorrichtung zur Ermittlung einer Höhe von einer Luftfeder mit den Merkmalen des unabhängigen Anspruchs 1. Weitere vorteilhafte Ausbildungen sind in den abhängigen Ansprüchen offenbart. Anspruch 5 offenbart eine Maschine mit wenigstens einer erfindungsgemäßen Vorrichtung. Anspruch 6 offenbart ein Kraftfahrzeug mit wenigstens einer erfindungsgemäßen Vorrichtung.

Anspruch 7 offenbart ein Verfahren zur Ermittlung einer Höhe von einer Luftfeder mit einer erfindungsgemäßen Vorrichtung.

Weitere Vorteile und Merkmale sind der allgemeinen Beschreibung sowie den Ausführungsbeispielen zu entnehmen.

Anspruch 1 offenbart eine Vorrichtung zur Ermittlung einer Höhe von einer Luftfeder. Die Vorrichtung weist einen Druckspeicher/Reservoir mit einem ersten Drucksensor zur Messung eines Drucks innerhalb des Druckspeichers/Reservoirs, die Luftfeder mit einem zweiten Drucksensor zur Messung eines Balgdrucks innerhalb eines Balgs der Luftfeder, wenigstens ein Ventil, wobei das Ventil ausgebildet ist, den Druckspeicher/Reservoir mit der Luftfeder zu verbinden oder zu trennen, und eine elektronische Rechenvorrichtung auf, welche ausgebildet ist, die Daten über den Balgdruck, den Druck innerhalb des Druckspeichers/Reservoirs, und eine Öffnungsdauer für die Ventilöffnung vorzugeben.

Die Rechenvorrichtung kann mit einer Steuervorrichtung für das bzw. die Ventile kombiniert sein. Im Folgenden wird der Begriff Rechenvorrichtung als Synonym für eine Kombination aus Rechen- und Steuervorrichtung gesprochen.

Die Vorrichtung ist dazu ausgebildet:
- mit dem ersten Drucksensor den Druck zu messen,
- mit dem zweiten Drucksensor den Balgdruck zu einem ersten Zeitpunkt zu messen,
- eine Druckdifferenz zwischen dem Druckspeicher/Reservoir und dem Balgdruck zu bestimmen,
- das Ventil für die Öffnungsdauer zwischen dem ersten Zeitpunkt und einem zweiten Zeitpunkt zu öffnen,
- mit dem zweiten Drucksensor den Balgdruck zu dem zweiten Zeitpunkt zu messen,
- die Balgdruckdifferenz zu berechnen,
- über die Druckdifferenz zwischen dem Druckspeicher/Reservoir und dem Balgdruck aus wenigstens einem auf der elektronischen Rechenvorrichtung hinterlegten Kennlinienfeld oder Kennfeld der Luftfeder zu wählen,
- über die Öffnungsdauer aus wenigstens einer Kennlinie des Kennlinienfeld oder Kennfelds zu wählen und
- anhand der Kennlinie über die Balgdruckdifferenz die Höhe der Luftfeder zu bestimmen.

Mit anderen Worten ist die Vorrichtung dazu ausgebildet, die Höhe einer Luftfeder zu bestimmen, ohne dass einer oder mehrere Sensoren zur Höhenmessung der Luftfeder erforderlich sind. Die Erfindung basiert auf der Erkenntnis, dass sich die Höhe der Luftfeder proportional zu dem Volumen eines Fluids innerhalb der Luftfeder vergrößert oder verkleinert. Der Zufluss eines Massestroms von dem Druckspeicher in die Luftfeder, oder umgekehrt, hat eine Veränderung des Balgdrucks der Luftfeder zur Folge. Der Betrag der Balgdruckdifferenz ist abhängig von dem Volumen und der Höhe der Luftfeder.

Der Zufluss des Massestroms von dem Druckspeicher in die Luftfeder ist abhängig von der Öffnungsdauer und der Differenz zwischen dem Druck im Druckspeicher und dem Balgdruck. Ein jeweiliges Kennlinienfeld oder Kennfeld der Luftfeder ist einer bestimmten Differenz zwischen dem Druck im Druckspeicher und dem Balgdruck zugeordnet. Das Kennlinienfeld oder Kennfeld kann eine oder mehrere Kennlinien aufweisen, die unterschiedlichen Öffnungsdauern zugeordnet sind. Die Kennlinien stellen mit anderen Worten den Verlauf von einander zugeordneten Wertepaaren der Balgdruckdifferenz und der Höhe der Luftfeder dar. Auf der Rechenvorrichtung können mehrere Kennlinienfelder oder Kennfelder für unterschiedliche Differenzen zwischen dem Druck im Druckspeicher und dem Balgdruck hinterlegt sein.

Mit dem Öffnen des Ventils für die Öffnungsdauer startet die Höhenermittlung und der daraus resultierende Anstieg des Balgdrucks ist der Eingangswert für die beschriebene Höhenermittlung. Durch Kenntnis der Druckdifferenz zwischen dem Druckspeicher/Reservoir kann die elektronische Rechenvorrichtung das passende Kennlinienfeld oder Kennfeld aus einem oder mehreren Kennlinienfeldern oder Kennfeldern bestimmen. Durch Kenntnis der Öffnungsdauer kann die elektronische Rechenvorrichtung die zutreffende Kennlinie des Kennlinienfelds oder Kennfelds auswählen. Über die berechnete Balgdruckdifferenz kann anhand der zuvor gewählten Kennlinie die Höhe der Luftfeder bestimmt werden. Die Höhe der Luftfeder repräsentiert z.B. den Abstand des Abrollkolbens und des Deckels der Luftfeder zueinander.

Durch den Verzicht auf zusätzliche Sensoren zur Höhenmessung können gegenüber bekannten Vorrichtungen zur Höhenermittlung Kosten eingespart werden. Außerdem muss eine geringere Menge an Sensordaten verarbeitet werden, wodurch die Ermittlung der Höhe schneller erfolgen kann und evtl. Regelungsvorgänge, z.B. zur Änderung der Höhe der Luftfeder, schneller erfolgen können. Da bei der erfindungsgemäßen Vorrichtung keine Sensorkomponenten z.B. in Form eines Senders und eines Empfängers zueinander ausgerichtet werden müssen, kann die Höhenermittlung auch bei Verkippung und bzw. oder Versatz zwischen dem Abrollkolben und dem Deckel gewährleistet werden.

Der Begriff Luftfeder subsummiert verschiedene Ausführungsformen von Luftfedern. Nicht einschränkende Beispiele einer Luftfeder können z.B. eine Rollbalg- oder Faltenbalg-Luftfeder sein.

Gemäß einem weiteren Aspekt sind auf der elektronischen Rechenvorrichtung mehrere Kennlinienfelder oder Kennfelder für unterschiedliche Druckdifferenzen hinterlegt. Wie zuvor erwähnt ist der Zufluss des Massestroms von dem Druckspeicher in die Luftfeder abhängig von der Differenz zwischen dem Druck im Druckspeicher und dem Balgdruck, weshalb eine ausschließliche Betrachtung der Öffnungsdauer zu einer unpräzisen Höhenermittlung führen würde. Durch das Hinterlegen mehrerer Kennlinienfelder oder Kennfelder kann auf vorteilhafte Weise eine präzisere Höhenermittlung für unterschiedliche Druckdifferenzen zwischen dem Druckspeicher und der Luftfeder erfolgen.

Gemäß einem weiteren Aspekt sind auf der elektronischen Rechenvorrichtung in einem oder mehreren Kennlinienfeldern oder Kennfeldern mehrere Kennlinien für unterschiedliche Öffnungsdauern hinterlegt. Die Öffnungsdauer hat Einfluss auf den Kennlinienverlauf und daraus resultierend Einfluss auf die Messgenauigkeit. Die Öffnungsdauer kann vorzugsweise weniger als eine Sekunde, bevorzugt 0,3 Sekunden, besonders bevorzugt 0,5 Sekunden betragen. Je nach Anwendungsfall kann auf vorteilhafte Weise die Genauigkeit der Höhenermittlung beeinflusst werden. Die Öffnungsdauer ist vorzugsweise so lang zu wählen, dass eine möglichst hohe Sensitivität der Messung erreicht werden kann, jedoch so kurz zu halten, dass die Luftfeder durch den Massezufluss ihre Höhe nicht ändern kann.

Der Balgdruck ist durch den zweiten Drucksensor messbar. Dieser zweite Sensor kann in der Luftfeder, an der Luftfeder, oder auch an anderen Systemkomponenten der Luftversorgung, (z.B. Leitung, Ventile, Verbindungselemente) der Luftfederanlage platziert werden. Mit anderen Worten kann auf diese Art und Weise der zweite Drucksensor innerhalb des Innenvolumens des Balges angeordnet werden. Hierdurch ergibt sich auf vorteilhafte Weise ein äußerst kompakter Aufbau, sodass die Luftfeder in ihren äußeren Abmessungen unverändert bleibt. Das ist besonders von Vorteil, wenn eine konventionelle Luftfeder gegen eine Luftfeder mit der erfindungsgemäßen Vorrichtung getauscht werden soll. Auch kann der zweite Drucksensor hierdurch vor äußeren Einflüssen wie beispielsweise Flüssigkeiten, Schmutz und dergleichen sowie vor Kontakt mit Gegenständen bzw. vor Berührung durch Personen geschützt werden.

Alternativ kann der Balgdruck durch den zweiten Drucksensor innerhalb einer die Luftfeder mit Druckluft versorgenden Druckluftleitung zwischen dem Ventil und der Luftfeder gemessen werden. Mit anderen Worten kann auf diese Art und Weise der zweite Drucksensor innerhalb des Innenvolumens der Druckluftleitung angeordnet werden. Dies kann vorteilhaft sein, da das für die Luft zur Verfügung stehende Innenvolumen der Luftfeder durch die Anordnung des zweiten Drucksensors nicht beeinflusst wird. Auch kann der zweite Drucksensor hierdurch vor äußeren Einflüssen wie beispielsweise Flüssigkeiten, Schmutz und dergleichen sowie vor Kontakt mit Gegenständen bzw. vor Berührung durch Personen geschützt werden.

Der Druck innerhalb des Druckspeichers/Reservoirs ist durch den ersten Drucksensor messbar. Dieser erste Sensor kann im Reservoir, am Reservoir, oder auch an anderen Systemkomponenten der Luftversorgung, (z.B. Leitung, Ventile, Verbindungselemente) der Luftfederanlage platziert werden. Mit anderen Worten kann auf diese Art und Weise der erste Drucksensor innerhalb des Innenvolumens des Druckspeichers/Reservoirs angeordnet werden. Hierdurch ergibt sich auf vorteilhafte Weise ein äußerst kompakter Aufbau, sodass der Druckspeicher/Reservoir in den äußeren Abmessungen unverändert bleibt. Das ist besonders von Vorteil, wenn eine konventionelle Luftfeder gegen eine Luftfeder mit der erfindungsgemäßen Vorrichtung getauscht werden soll. Auch kann der erste Drucksensor hierdurch vor äußeren Einflüssen wie beispielsweise Flüssigkeiten, Schmutz und dergleichen sowie vor Kontakt mit Gegenständen bzw. vor Berührung durch Personen geschützt werden.

Alternativ kann der Druck innerhalb des Druckspeichers/Reservoirs durch den ersten Drucksensor innerhalb der die Luftfeder mit Druckluft versorgenden Druckluftleitung zwischen dem Druckspeicher/Reservoir und dem Ventil gemessen werden. Mit anderen Worten kann auf diese Art und Weise der erste Drucksensor innerhalb des Innenvolumens der Druckluftleitung angeordnet werden. Dies kann vorteilhaft sein, da das für die Luft zur Verfügung stehende Innenvolumen des Druckspeichers/Reservoirs durch die Anordnung des ersten Drucksensors nicht beeinflusst wird. Auch kann der erste Drucksensor hierdurch vor äußeren Einflüssen wie beispielsweise Flüssigkeiten, Schmutz und dergleichen sowie vor Kontakt mit Gegenständen bzw. vor Berührung durch Personen geschützt werden.

Gemäß einem weiteren Aspekt entspricht der Druck innerhalb des Druckspeichers/Reservoirs dem maximalen Abschaltdruck. Vorzugsweise beträgt der Druck innerhalb des Druckspeichers/Reservoirs 12,5 bar. Es zeigt sich als besonders vorteilhaft, dass bei maximalem Abschaltdruck ein maximaler Druckgradient bzw. eine maximale Druckdifferenz zwischen dem Druckspeicher und der Luftfeder vorliegt, wodurch eine besonders hohe Sensitivität der Messung mit einer besonders hohen Messgenauigkeit erreicht werden kann.

Die vorliegende Erfindung betrifft außerdem eine Maschine mit wenigstens einer erfindungsgemäßen Vorrichtung. Die zuvor erläuterten Vorteile und Eigenschaften lassen sich so auf eine Maschine übertragen und dort nutzen.

Die vorliegende Erfindung betrifft außerdem Kraftfahrzeug mit wenigstens einer erfindungsgemäßen Vorrichtung. Die zuvor erläuterten Vorteile und Eigenschaften lassen sich so auf ein Kraftfahrzeug übertragen und dort nutzen.

Die vorliegende Erfindung betrifft außerdem ein Verfahren zur Ermittlung einer Höhe von einer Luftfeder mit einer erfindungsgemäßen Vorrichtung, gekennzeichnet durch die folgenden Verfahrensschritte:
- Messen des Drucks innerhalb des Druckspeichers/Reservoir mit dem ersten Drucksensor,
- Messen des Balgdrucks mit dem zweiten Drucksensor zu dem ersten Zeitpunkt,
- Bestimmung der Druckdifferenz zwischen dem Druckspeicher/Reservoir und Balgdruck,
- Öffnen des Ventils für die Öffnungsdauer zwischen dem ersten Zeitpunkt und dem zweiten Zeitpunkt,
- Messen des Balgdrucks zu dem zweiten Zeitpunkt mit dem zweiten Drucksensor,
- Berechnen der Balgdruckdifferenz,
- Wählen aus wenigstens einem auf der elektronischen Rechenvorrichtung hinterlegten Kennlinienfeld oder Kennfeld der Luftfeder über die Druckdifferenz zwischen dem Druckspeicher/Reservoir und dem Balgdruck,
- Wählen aus wenigstens einer Kennlinie des Kennlinienfeld oder Kennfelds über die Öffnungsdauer und
- Bestimmen der Höhe der Luftfeder anhand der Kennlinie über die Balgdruckdifferenz.

Mit anderen Worten kann durch das Verfahren die Höhe einer Luftfeder bestimmt werden, ohne dass einer oder mehrere Sensoren zur Höhenmessung der Luftfeder erforderlich sind. Durch den Verzicht auf zusätzliche Sensoren zur Höhenmessung können gegenüber bekannten Verfahren zur Höhenermittlung Kosten eingespart werden. Außerdem muss eine geringere Menge an Sensordaten verarbeitet werden, wodurch die Ermittlung der Höhe schneller erfolgen kann und evtl. Regelungsvorgänge, z.B. zur Änderung der Höhe der Luftfeder, schneller erfolgen können. Da bei dem erfindungsgemäßen Verfahren keine Sensorkomponenten z.B. in Form eines Senders und eines Empfängers zueinander ausgerichtet werden müssen, kann die Höhenermittlung auch bei Verkippung und bzw. oder Versatz zwischen dem Abrollkolben und dem Deckel gewährleistet werden.

Anhand der Zeichnungen werden im Folgenden mehrere Ausführungsbeispiele und weitere Vorteile der Erfindung schematisch dargestellt und näher erläutert.

Figur 1 zeigt eine schematische Darstellung der erfindungsgemäßen Vorrichtung zur Ermittlung einer Höhe einer Luftfeder gemäß eines ersten Ausführungsbeispiels mit einem geschlossenen Ventil.

Figur 2 zeigt eine schematische Darstellung der erfindungsgemäßen Vorrichtung gemäß eines zweiten Ausführungsbeispiels mit geöffnetem Ventil.

Figur 3 zeigt beispielhaft ein in der elektronischen Rechenvorrichtung hinterlegtes Kennlinienfeld der erfindungsgemäßen Vorrichtung.

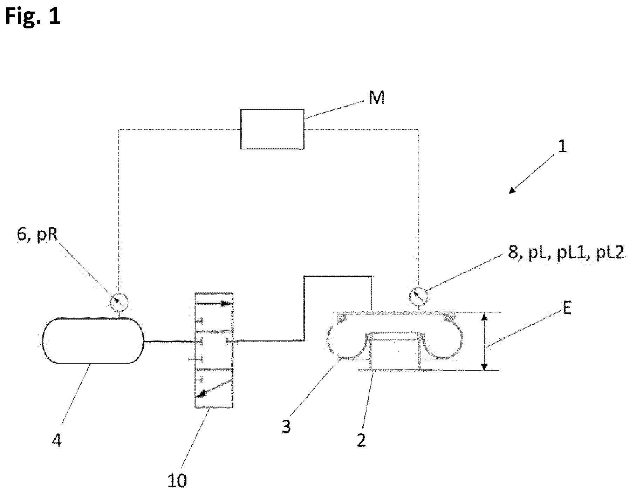

Fig. 1 zeigt schematisch dargestellt eine Vorrichtung 1 zur Ermittlung einer Höhe E von einer Luftfeder 2 mit einem geschlossenen Ventil 10. Die Vorrichtung 1 weist einen Druckspeicher/Reservoir 4 mit einem ersten Drucksensor 6 zur Messung eines Drucks pR innerhalb des Druckspeichers/Reservoirs 4 auf. Weiterhin umfasst die Vorrichtung 1 die Luftfeder 2 mit einem zweiten Drucksensor 8 zur Messung eines Balgdrucks pL innerhalb eines Balgs 3 der Luftfeder 2 und das Ventil 10. Das Ventil 10 trennt in dem gezeigten Ausführungsbeispiel die Verbindung zwischen dem Druckspeicher/Reservoir 4 und der Luftfeder 2. Die Vorrichtung 1 weist außerdem eine elektronische Rechenvorrichtung M auf, welche die Daten über den Balgdruck pL, den Druck pR erhält und eine Öffnungsdauer Δt vorgibt. Mit dem ersten Drucksensor 6 wird der Druck pR gemessen. Der zweite Drucksensor 8 misst den Balgdruck pL1 zu einem ersten Zeitpunkt t1. Die Rechenvorrichtung M bestimmt eine Druckdifferenz pR-pL1 zwischen dem Druckspeicher/Reservoir 4 und der Luftfeder 2.

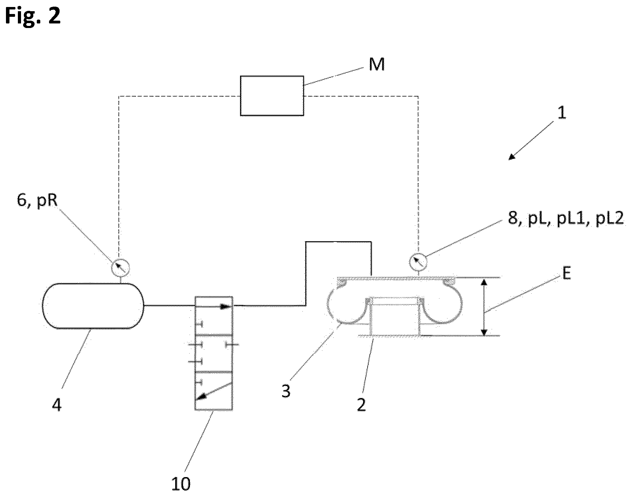

Figur 2 zeigt eine schematische Darstellung der erfindungsgemäßen Vorrichtung 1 mit geöffnetem Ventil 10. Das Ventil 10 öffnet für die Öffnungsdauer Δt zwischen dem ersten Zeitpunkt t1 und einem zweiten Zeitpunkt t2, wobei ein Massestrom von dem Druckspeicher/Reservoir 4 in die Luftfeder 2 aufgrund des Druckgradienten fließt. Mit dem zweiten Drucksensor 8 wird der Balgdruck pL2 zu dem zweiten Zeitpunkt t2 gemessen. Die elektronische Rechenvorrichtung M berechnet die Balgdruckdifferenz pL2 - pL1. Über die Öffnungsdauer Δt und die Druckdifferenz pR-pL1 zwischen dem Druckspeicher/Reservoir 4 und dem Balgdruck pL1 wird aus wenigstens einem auf der elektronischen Rechenvorrichtung M hinterlegten Kennlinienfeld oder Kennfeld der Luftfeder 2 gewählt.

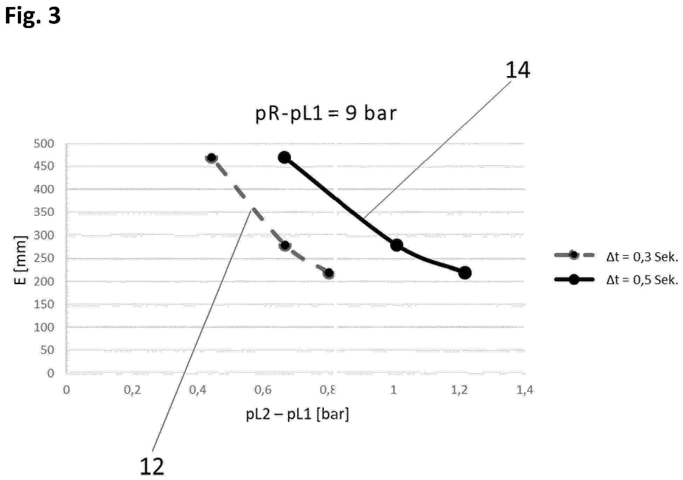

Figur 3 zeigt beispielhaft ein in der elektronischen Rechenvorrichtung M hinterlegtes Kennlinienfeld der erfindungsgemäßen Vorrichtung 1. Das dargestellte Kennlinienfeld ist gültig für eine Druckdifferenz pR-pL1 zwischen dem Druckspeicher/Reservoir 4 und der Luftfeder 2 von 9 bar. Das Kennlinienfeld weist zwei Kennlinien auf, wobei eine erste Kennlinie 12 die Öffnungsdauer Δt von 0,3 Sekunden und eine zweite Kennlinie 14 die Preiodendauer Δt von 0,5 Sekunden repräsentiert. Über die Balgdruckdifferenz pL2 - pL1 und die erste Kennlinie 12 oder die zweite Kennlinie 14 wird die Höhe E bestimmt.

### Bezugszeichenliste (Teil der Beschreibung)

- 1: Vorrichtung
- 2: Luftfeder
- 3: Balg
- 4: Druckspeicher/Reservoir
- 6: erster Drucksensor
- 8: zweiter Drucksensor
- 10: Ventil
- 12: erste Kennlinie
- 14: zweite Kennlinie

- E: Höhe der Luftfeder
- M: elektronische Rechenvorrichtung (ECU); Microcontroller
- pL: Balgdruck
- pL1: Balgdruck zu einem ersten Zeitpunkt
- pL2: Balgdruck zu einem zweiten Zeitpunkt
- pL2-pL1: Balgdruckdifferenz
- pR: Druck innerhalb des Druckspeichers/Reservoirs
- pR-pL1: Druckdifferenz zwischen dem Druckspeicher/Reservoir und der Luftfeder
- t1: erster Zeitpunkt
- t2: zweiter Zeitpunkt
- Δt: Öffnungsdauer

## Patentansprüche

1. Vorrichtung (1) zur Ermittlung einer Höhe (E) von einer Luftfeder (2), wobei die Vorrichtung (1)
einen Druckspeicher/Reservoir (4) mit einem ersten Drucksensor (6) zur Messung eines Drucks (pR) innerhalb des Druckspeichers/Reservoirs (4), die Luftfeder (2) mit einem zweiten Drucksensor (8) zur Messung eines Balgdrucks (pL) innerhalb eines Balgs (3) der Luftfeder (2),
wenigstens ein Ventil (10), wobei das Ventil (10) ausgebildet ist, den Druckspeicher/Reservoir (4) mit der Luftfeder (2) zu verbinden oder zu trennen,
und eine elektronische Rechenvorrichtung (M) aufweist, welche ausgebildet ist, die Daten über den Balgdruck (pL), den Druck (pR) innerhalb des Druckspeichers/Reservoirs (4), und eine Öffnungsdauer (Δt) zu erhalten,
wobei
die Vorrichtung (1) ausgebildet ist
- mit dem ersten Drucksensor (6) den Druck (pR) zu messen,
- mit dem zweiten Drucksensor (8) den Balgdruck (pL1) zu einem ersten Zeitpunkt (t1) zu messen,
- eine Druckdifferenz (pR-pL1) zwischen dem Druckspeicher/Reservoir (4) und dem Balgdruck (pL1) zu bestimmen,
- das Ventil (10) für die Öffnungsdauer (Δt) zwischen dem ersten Zeitpunkt (t1) und einem zweiten Zeitpunkt (t2) zu öffnen,
- mit dem zweiten Drucksensor (8) den Balgdruck (pL2) zu dem zweiten Zeitpunkt (t2) zu messen,
- die Balgdruckdifferenz (pL2 - pL1) zu berechnen,
- über die Druckdifferenz (pR-pL1) zwischen dem Druckspeicher/Reservoir (4) und dem Balgdruck (pL1) aus wenigstens einem auf der elektronischen Rechenvorrichtung (M) hinterlegten Kennlinienfeld/Kennfeld der Luftfeder (2) zu wählen,
- über die Öffnungsdauer (Δt) aus wenigstens einer Kennlinie (12, 14) des Kennlinienfelds/Kennfelds zu wählen und
- anhand der Kennlinie (12, 14) über die Balgdruckdifferenz (pL2 - pL1) die Höhe (E) der Luftfeder (2) zu bestimmen.

2. Vorrichtung (1) nach Anspruch 1,
**dadurch gekennzeichnet, dass**
auf der elektronischen Rechenvorrichtung (M) mehrere Kennlinienfelder/Kennfelder für unterschiedliche Druckdifferenzen (pR-pL1) hinterlegt sind.

3. Vorrichtung (1) nach einem der vorhergehenden Ansprüche,
**dadurch gekennzeichnet, dass**
auf der elektronischen Rechenvorrichtung (M) in einem oder mehreren Kennlinienfeldern/Kennfeldern mehrere Kennlinien (12, 14) für unterschiedliche Öffnungsdauern (Δt) hinterlegt sind.

4. Vorrichtung (1) nach einem der vorhergehenden Ansprüche,
**dadurch gekennzeichnet, dass**
der Druck (pR) innerhalb des Druckspeichers/Reservoirs (4) dem maximalen Abschaltdruck entspricht, vorzugsweise 12,5 bar beträgt

5. Maschine mit wenigstens einer Vorrichtung nach einem der Ansprüche 1 bis 4.

6. Kraftfahrzeug mit einer Vorrichtung nach einem der Ansprüche 1 bis 4.

7. Verfahren zur Ermittlung einer Höhe (E) von einer Luftfeder (2) mit einer Vorrichtung (1) nach einem der Ansprüche 1 bis 4, **gekennzeichnet durch** die folgenden Verfahrensschritte:
- Messen des Drucks (pR) mit dem ersten Drucksensor (6),
- Messen des Balgdrucks (pL1) mit dem zweiten Drucksensor (8) zu dem ersten Zeitpunkt (t1),
- Bestimmung der Druckdifferenz (pR-pL1) zwischen dem Druckspeicher/Reservoir (4) und dem Balgdruck (pL1),
- Öffnen des Ventils (10) für die Öffnungsdauer (Δt) zwischen dem ersten Zeitpunkt (t1) und dem zweiten Zeitpunkt (t2),
- Messen des Balgdrucks (pL2) zu dem zweiten Zeitpunkt (t2) mit dem zweiten Drucksensor (8),
- Berechnen der Balgdruckdifferenz (pL2 - pL1),
- Wählen aus wenigstens einem auf der elektronischen Rechenvorrichtung (M) hinterlegten Kennlinienfeld/Kennfeld der Luftfeder (2) über die Druckdifferenz (pR-pL1) zwischen dem Druckspeicher/Reservoir (4) und dem Balgdruck (pL1)
- Wählen aus wenigstens einer Kennlinie (12, 14) des Kennlinienfelds/Kennfelds über die Öffnungsdauer (Δt) und
- Bestimmen der Höhe (E) der Luftfeder (2) anhand der Kennlinie (12, 14) über die Balgdruckdifferenz (pL2 - pL1).

## Claims

1. Device (1) for determining a height (E) of an air spring (2), wherein the device (1) a pressure accumulator/reservoir (4) with a first pressure sensor (6) for measuring a pressure (pR) within the pressure accumulator/reservoir (4),
the air spring (2) with a second pressure sensor (8) for measuring a bellows pressure (pL) within a bellows (3) of the air spring (2),
at least one valve (10), wherein the valve (10) is designed to connect or separate the pressure accumulator/reservoir (4) with the air spring (2),
and has an electronic computing device (M) which is designed to obtain data on the bellows pressure (pL), the pressure (pR) within the pressure accumulator/reservoir (4), and an opening time (Δt),
**characterized by** the fact that
the device (1) is designed
- to measure the pressure (pR) with the first pressure sensor (6),
- to measure the bellows pressure (pL1) at a first time (t1) with the second pressure sensor (8),
- determine a pressure difference (pR-pL1) between the pressure accumulator/reservoir (4) and the bellows pressure (pL1),
- to open the valve (10) for the opening period (Δt) between the first time (t1) and a second time (t2),
- to measure the bellows pressure (pL2) at the second time (t2) with the second pressure sensor (8),
- calculate the bellows pressure difference (pL2 - pL1),
- to select the pressure difference (pR-pL1) between the pressure accumulator/reservoir (4) and the bellows pressure (pL1) from at least one characteristic curve field/characteristic map of the air spring (2) stored on the electronic calculator (M),
- to choose from at least one characteristic curve (12, 14) of the characteristic curve field/characteristic map over the opening period (Δt) and
- to determine the height (E) of the air spring (2) on the basis of the characteristic curve (12, 14) via the bellows pressure difference (pL2 - pL1).

2. Device (1) according to claim 1,
**characterized by** the fact that
several characteristic curve fields/characteristic maps for different pressure differences (pR-pL1) are stored on the electronic calculator (M).

3. Device (1) according to any of the preceding claims,
**characterized by** the fact that
several characteristic curves (12, 14) for different opening times (Δt) are stored on the electronic calculator (M) in one or more characteristic curve fields/characteristic maps.

4. Device (1) according to any of the preceding claims,
**characterized by** the fact that
the pressure (pR) within the pressure accumulator/reservoir (4) corresponds to the maximum shut-off pressure, preferably 12.5 bar

5. A machine comprising at least one apparatus according to any one of claims 1 to 4.

6. A motor vehicle having a device according to any one of claims 1 to 4.

7. A method for determining a height (E) of an air spring (2) using an apparatus (1) according to any one of claims 1 to 4, **characterized by** the following method steps:
- Measuring the pressure (pR) with the first pressure sensor (6),
- Measuring the bellows pressure (pL1) with the second pressure sensor (8) at the first time (t1),
- Determination of the pressure difference (pR-pL1) between the pressure accumulator/reservoir (4) and the bellows pressure (pL1),
- Opening of the valve (10) for the opening time (Δt) between the first time (t1) and the second time (t2),
- Measuring the bellows pressure (pL2) at the second time (t2) with the second pressure sensor (8),
- Calculating the bellows pressure difference (pL2 - pL1),
- Select from at least one characteristic curve field/map of the air spring (2) stored on the electronic calculator (M) about the pressure difference (pR-pL1) between the pressure accumulator/reservoir (4) and the bellows pressure (pL1)
- Choose from at least one characteristic curve (12, 14) of the characteristic curve field/characteristic map over the opening time (Δt) and
- Determine the height (E) of the air spring (2) using the characteristic curve (12, 14) via the bellows pressure difference (pL2 - pL1).

## Revendications

1. Dispositif (1) pour déterminer une hauteur (E) d'un ressort pneumatique (2), dans lequel le dispositif (1)
un accumulateur de pression/réservoir (4) avec un premier capteur de pression (6) pour mesurer une pression (pR) à l'intérieur de l'accumulateur/réservoir de pression (4),
le ressort pneumatique (2) avec un second capteur de pression (8) pour mesurer la pression d'un soufflet (pL) à l'intérieur d'un soufflet (3) du ressort pneumatique (2),
au moins une soupape (10), dans laquelle la soupape (10) est conçue pour relier ou séparer l'accumulateur/réservoir de pression (4) avec le ressort pneumatique (2),
et dispose d'un dispositif de calcul électronique (M) conçu pour obtenir des données sur la pression du soufflet (pL), la pression (pR) à l'intérieur de l'accumulateur/réservoir de pression (4) et un temps d'ouverture (Δt),
**caractérisée par le fait que**
L'appareil (1) est conçu
- de mesurer la pression (pR) avec le premier capteur de pression (6),
- de mesurer la pression du soufflet (pL1) dans un premier temps (t1) avec le second capteur de pression (8),
- déterminer une différence de pression (pR-pL1) entre l'accumulateur/réservoir de pression (4) et la pression du soufflet (pL1),
- d'ouvrir la vanne (10) pendant la période d'ouverture (Δt) entre la première fois (t1) et une seconde fois (t2),
- de mesurer la pression du soufflet (pL2) en second temps (t2) avec le second capteur de pression (8),
- calculer la différence de pression du soufflet (pL2 - pL1),
- sélectionner la différence de pression (pR-pL1) entre l'accumulateur de pression/réservoir (4) et la pression du soufflet (pL1) à partir d'au moins un champ de courbe/carte caractéristique du ressort pneumatique (2) enregistré sur le calculateur électronique (M),
- de choisir parmi au moins une courbe caractéristique (12, 14) du champ de courbe caractéristique/carte caractéristique sur la période d'ouverture (Δt) et
- déterminer la hauteur (E) du ressort pneumatique (2) sur la base de la courbe caractéristique (12, 14) via la différence de pression du soufflet (pL2 - pL1).

2. Dispositif (1) selon la revendication 1,
**caractérisée par le fait que**
plusieurs champs de courbes caractéristiques/cartes caractéristiques pour différentes différences de pression (pR-pL1) sont stockés sur le calculateur électronique (M).

3. Dispositif (1) selon l'une quelconque des revendications précédentes,
**caractérisée par le fait que**
plusieurs courbes caractéristiques (12, 14) pour différents temps d'ouverture (Δt) sont stockées sur le calculateur électronique (M) dans un ou plusieurs champs de courbes caractéristiques/cartes caractéristiques.

4. Dispositif (1) selon l'une quelconque des revendications précédentes,
**caractérisée par le fait que**
la pression (pR) à l'intérieur de l'accumulateur de pression/réservoir (4) correspond à la pression maximale d'arrêt, de préférence 12,5 bar

5. Machine comprenant au moins un dispositif selon l'une quelconque des revendications 1 à 4.

6. Véhicule à moteur doté d'un dispositif selon l'une quelconque des revendications 1 à 4.

7. Procédé de détermination de la hauteur (E) d'un ressort pneumatique (2) à l'aide d'un appareil (1) selon l'une quelconque des revendications 1 à 4, **caractérisé par** les étapes de procédé suivantes :
- Mesure de la pression (pR) avec le premier capteur de pression (6),
- Mesure de la pression du soufflet (pL1) avec le second capteur de pression (8) dans un premier temps (t1),
- Détermination de la différence de pression (pR-pL1) entre l'accumulateur/réservoir de pression (4) et la pression du soufflet (pL1),
- Ouverture de la vanne (10) pour le temps d'ouverture (Δt) entre la première fois (t1) et la seconde fois (t2),
- Mesure de la pression du soufflet (pL2) au second moment (t2) avec le deuxième capteur de pression (8),
- Calcul de la différence de pression du soufflet (pL2 - pL1),
- Sélectionnez dans au moins un champ/carte de courbe caractéristique du ressort pneumatique (2) enregistré sur le calculateur électronique (M) environ la différence de pression (pR-pL1) entre l'accumulateur/réservoir de pression (4) et la pression du soufflet (pL1)
- Choisir parmi au moins une courbe caractéristique (12, 14) du champ de courbe caractéristique/carte caractéristique sur le temps d'ouverture (Δt) et
- Déterminer la hauteur (E) du ressort pneumatique (2) à l'aide de la courbe caractéristique (12, 14) via la différence de pression du soufflet (pL2 - pL1).
